# EUROPÄISCHE PATENTSCHRIFT

(11) **EP 1 695 633 B1**
(45) Veröffentlichungstag und Bekanntmachung des Hinweises auf die Patenterteilung: **20.01.2010**
(21) Anmeldenummer: 05003959.3
(22) Anmeldetag: 24.02.2005
(51) Int. Cl.: A23K 1/00, A23K 1/16, A23K 1/165

(54) **Granulat für die Herstellung von Tiernahrungspellets**
Granule for producing animal feed pellets
Granulé pour la préparation de pastilles pour alimentation animale

(43) Veröffentlichungstag der Anmeldung: 30.08.2006
(73) Patentinhaber: IPC Process-Center GmbH & Co., 01277 Dresden (DE)
(72) Erfinder: van Lookeren Campagne, Constant, 3722 BR Bilthoven (NL); Jacob, Michael, 99427 Weimar (DE); Kempe, Wolfgang, 01169 Dresden (DE)
(74) Vertreter: Pfenning, Meinig & Partner GbR

(56) Entgegenhaltungen:
- EP-A- 0 234 078
- EP-B- 0 758 018
- WO-A-01/00042
- WO-A-03/056934
- AU-B2- 617 897
- DE-A1- 10 326 231

## Beschreibung

Die Erfindung betrifft ein aktive Additive enthaltendes Granulat, das besonders bevorzugt als Vorprodukt für die Herstellung von Tiernahrungspellets einsetzbar ist. Dabei kann insbesondere ein hoher Anteil an einem oder mehreren aktiven Nahrungsadditiven enthalten sein. Dabei soll der Anteil aktiver Additive oberhalb 30 Masse-% in den einzelnen Granulaten liegen.

Es ist üblich, Tiernahrungsmittel mit aktiven Additiven zu versetzen, wobei solche Additive z. B. Vitamine, Antioxidanten, Farbstoffe und insbesondere aktive Enzyme sind.

Sie können jeweils allein oder als Mischung enthalten sein. Enzyme sollten dabei bevorzugt bei der Verdauung aufschließend/digestiv sein. Viele aktive Additive, wie beispielsweise Enzyme sind temperaturempfindlich und reduzieren Ihre Aktivität bei Temperaturen oberhalb 40 °C. Auch Vitamine, wie beispielsweise Vitamin A-Acetat oder Vitamin C verringern ihre Aktivität ebenfalls bei den Bedingungen, wie sie bei einer Pelletierung vorkommen. Diese Bedingungen bei der Pelletierung werden im Wesentlichen durch hohen Druck und Scherkräfte sowie Temperaturen zwischen 70 und 150 °C und auch den Einfluss von Wasserdampf bestimmt. Die Einwirkzeit bei der Pelletierung bei diesen Bedingungen ist relativ kurz (in der Regel ca. lediglich eine Minute oder kürzer). An den Pelletierprozess schließt sich eine Abkühlphase für die hergestellten Tiernahrungspellets an.

Im Fall, dass das Granulat groß ist und eine mittlere Partikelgröße von mehr als 1,5 mm aufweist, erreicht die Temperatur im Kern der Granulate nicht die Temperatur die bei der Pelletierung herrscht und so kann der Einfluss der hohen Temperaturen im Bereich des Kernes von Granulaten reduziert werden. Daraus folgt, dass große Partikel mit einem niedrigen Anteil an aktiven Additiven relativ gesehen mehr Wärme pro Masse an aktiven Additiven absorbieren. Es ist aber vorteilhaft eine hohe Konzentration an aktiven Additiven im Granulat zu erreichen, da dadurch der Aufwand für den Transport, die Lagerung und die Herstellungskosten reduziert werden können. Dieser Sachverhalt ist insbesondere bedeutsam, wenn die aktive Additive enthaltenden Granulate vermischt werden und ein Vorprodukt für die Herstellung von Pellets bilden sollen.

Wenn die Additive innerhalb von Nahrungspellets gleichmäßig verteilt werden sollen, also jedes Nahrungspellet die gleiche Konzentration an aktiven Additiven enthalten soll, ist es daher wichtig, dass die Anzahl der aktive Additive enthaltenden Granulate so dosiert werden kann, dass eine bestimmte Dosierungsrate pro Masse an Tiernahrung erreicht wird.
So soll häufig die Anzahl einzelner Granulen größer als die einzelner Nahrungspellets je Masseeinheit nach der Pelletierung sein. Dadurch wird die Konzentration an aktiven Additiven in Pellets reduziert. Wenn das Additive enthaltende Granulat kleinere Abmessungen und eine kleinere Partikelgrößenverteilung aufweist, werden die aktiven Additive deutlich mehr der hohen Temperatur ausgesetzt. Auch wenn der Raum für die Einführung von Schutzträgern geringer wird, tritt ein Verlust an Aktivität der Additive beim Pelletierungsprozess zu einem Tiernahrungsmittel auf.

Dieses Problem wirkt sich deutlich stärker für aktive Additive aus, die relativ instabil bei den üblichen bei der Pelletierung auftretenden Temperaturen sind. Dies trifft beispielsweise insbesondere auf Enzymproteine und Vitamin C zu.

Aus US 4,187,322 ist eine trockene fließfähige Pulvermischung bekannt, die aus vorgequollenen Cerealkörnern hergestellt ist, die mit 15 bis 45 Masse-% Vitamin C als aktives Additiv absorbiert ist. Die Pulverpartikel haben äußere Abmessungen im Bereich zwischen 250 µm bis ca. 2000 µm und haben keine äußere Schutzschicht, die den Einfluss bei der Herstellung von Pellets reduzieren kann. Sie weisen eine verringerte Stabilität bei der Pelletierung auf, wenn der Anteil an aktivem Vitamin C größer als 30 Masse-% im Vergleich zu Pulverpartikeln, die mit einer geeigneten Schutzschicht versehen sind, auf.

In diesem Stand der Technik werden keine Angaben zu den bei der Pelletierung herrschenden Temperaturen und einem ggf. auftretenden Verlust an Aktivität gemacht. Nach der Pelletierung soll bei diesem Pulver eine geringe Konzentration von Vitamin C von 200 mg/kg erreicht worden sein. Es ist aber zweifelsfrei der Fall, dass das lediglich absorbierte Vitamin C, als aktives Additiv bei den üblichen bei der Pelletierung herrschenden Temperaturen einen erheblichen Verlust an Aktivität aufweisen muss, da die üblichen Pelletisierungstemperaturen oberhalb 70 °C liegen.

EP 0 758 018 B1 betrifft ein beschichtetes Granulat mit Phytase als aktives Additiv. Der Anteil an Phytase soll dabei im Bereich zwischen 5 bis 30 Masse-% des beschichteten Granulats liegen. Es werden nur organische Komponenten für die Beschichtung eingesetzt, die eine geringe latente Wärme bei der Pelletierung herrschenden Temperaturen aufweisen. Die nicht beschichteten Kerne haben eine relativ große Größe und einen geringen Anteil an aktiven Additiven mit einem Maximum von 35 Masse-%, so dass sie für eine Beschichtung, bei der Herstellung von Nahrungsgranulat mit aktiven Additiven mit einem Anteil größer als 30 Masse-% nicht geeignet sind. Der Nachteil dieses Nahrungsgranulates liegt in ihrem geringen Anteil an aktiven Additiven den daraus resultierenden hohen Kosten bei der Formulierung von Tiernahrung mit hohem Aktivadditivanteil.

EP 0 969 089 A1 betrifft eine stabilisierte Phytaseformulierung, die für den Einsatz als Nahrungsadditiv geeignet ist. Bei dieser Formulierung, ist es nachteilig, dass sie einen hohen Anteil an organischen Stabilisatoren, wie z. B. Vernetzer aufweist und generell der Anteil an aktivem Additiv in der Formulierung kleiner als 30 Masse-% ist.

In EP 0 758 018 B1 ist ebenfalls ein Granulat mit weniger als 30 Masse-% Phytase beschrieben. Die Kerne des Granulats enthalten maximal 5 Masse-% MgSO₄.7H₂O, um die Lagerstabilität der Enzyme zu verbessern. Die Kerne können auch beschichtet sein. Es sind dabei keine Aussagen über die Pelletierungsstabilität der Granulate gemacht worden. Auch hier ist der geringe Anteil an aktivem Additiv nachteilig.

Aus WO 00/01793 ist ein Granulat mit einem Enzym enthaltenden Kern bekannt, dass mit einer schützenden, den Kern einkapselnden Schicht versehen ist. Dabei sind mindestens 60 % einer wasserlöslichen Komponente mit einem Molekulargewicht unterhalb 500 g/mol, einem pH-Wert unter 11 und einer konstanten Feuchtigkeit bei 20 °C von mehr als 81 % vorhanden. Die wasserlösliche Komponente kann ein hydriertes anorganisches Salz, wie MgSO₄, ZnSO₄ oder ein anderes hydriertes Salz sein. Das Granulat hat eine verbesserte Lagerstabilität bei schwierigen Bedingungen, und in Atmosphären, die Peroxide enthalten. Es sind keine Aussagen über die Pelletierungsstabilität des Granulats oder die Größe des beschichteten Granulats gemacht worden. Der Enzymanteil in den nicht beschichteten Kernen oder Enzymträgern ist mit einem Wert von 0,5 bis 20 Masse-% der Kerne angegeben. Auch hier ist der geringe Anteil unterhalb 30 Masse-% an Enzymprotein nachteilig.

Aus WO 98/55599 ist eine Phytasezusammensetzung bekannt. Die Phytaseaktivität des Granluats ist mit unterhalb 9000 FTU/g bezeichnet worden. Die Phytase ist eine Aspergillusphytase und daher eindeutig bestimmbar, wobei der Anteil an aktivem Enzymprotein unterhalb 30 Masse-% liegt. Dies liegt daran, dass das Granulat einen hohen Anteil an Stärke als Träger aufweist. Das Phytase enthaltende Granulat hat einen durchschnittlichen Außendurchmesser von 600 µm. Es sind keine Angaben für eine Schutzschicht gemacht worden. Da diese Phytase enthaltenden Granulate keine geeignete Schutzschicht aufweisen, ist die Pelletierungsstabilität bei einer Temperatur von 280 °C kleiner als 50 %. Der Nachteil hierbei liegt ebenfalls darin, dass der Anteil an aktivem Additiv kleiner als 30 Masse-% ist.

Aus WO 01/83727 ist ein Phytase enthaltendes Granulat mit einer Aktivität von ca. 80 000 FTU/g bekannt. Das Granulat hat eine mittlere Partikelgröße von weniger als 600 µm. Es sind keine Angaben über eine Beschichtung oder die Pelletierungsstabilität angegeben.

Ein günstiger Herstellungsprozess für Kerne mit einem hohen Anteil an aktiven Additiven ist aus DE 103 26 231 A1 bekannt. Die Kerne haben eine deutlich höhere Aktivität und einen geringeren Anteil an inaktiven Enzymproteinen und eine geeignete Größe als Ausgangspunkt für eine Beschichtung. Es sind keine Angaben über die Pelletierstabilität oder eine schützende Beschichtung enthalten. Nachteilig bei diesem Granulat ist es, dass sie keine Schutzschicht gegen den Verlust an Aktivität bei erhöhten Temperaturen, wie sie bei der Pelletierung herrschen, aufweisen.

In keinem Fall sind aus dem Stand der Technik Granulate bekannt, bei denen der Anteil an aktiven Additiven größer als 30 Masse-% ist und die eine Schutzschicht gegen einen Aktivitätsverlust während des Pelletierungsprozesses aufweisen.

Aus EP 0 234 078 A1 sind Mikrokapseln und ein Verfahren zu deren Herstellung bekannt, die mit einer Wachsschicht versehen sind.

In WO 01/00042 A1 sind polymerbeschichtete, granulierte enzymhaltige Futtermittelzusätze und ein Verfahren zu deren Herstellung offenbart.

Es ist daher Aufgabe der Erfindung, ein Granulat für die Herstellung von Tiernahrungspellets zur Verfügung zu stellen, in dem aktive Additive mit einem hohen Anteil enthalten sind, die eine Reduzierung des Aktivitätsverlustes von aktiven Additiven, bei erhöhten Temperaturen, die bei einem Pelletierprozess herrschen, erreichen.

Erfindungsgemäß wird diese Aufgabe mit einem Verfahren, dass die Merkmale des Anspruchs 1 aufweist, gelöst. Dabei kann ein Granulat nach Anspruch 9 hergestellt werden. Vorteilhafte Ausgestaltungsformen und Weiterbildungen der Erfindung können mit den in den untergeordneten Ansprüchen bezeichneten Merkmalen erreicht werden.

Das erfindungsgemäße Granulat weist dabei einen Kern, mit einem Anteil von mindestens 25 Masse-%, bevorzugt mindestens 30 Masse-%, besonders bevorzugt von mindestens 35 Masse-% einer oder mehrerer aktiver Additive auf. Dieser Kern ist außen mit mindestens einer Beschichtung versehen. Die Beschichtung ist aus einem Stoff bzw. Stoffgemisch gebildet worden, der/das eine Phasenumwandlung im Temperaturbereich zwischen 30 °C und 120 °C vollziehen kann.

Bei einer Phasenumwandlung ändert sich bei Erreichen einer bestimmten Phasenumwandlungstemperatur der jeweilige Stoff oder ein Stoffgemisch und gleichzeitig wird eine bestimmte Wärmemenge, die als latente Wärme oder Umwandlungswärme bezeichnet wird, vom jeweiligen Stoff aufgenommen. Die Phasenumwandlung kann so erfolgen, dass sich der jeweilige Aggregatzustand des Stoffes oder Stoffgemisches ändert, so dass er aus einer festen Phase teilweise oder vollständig in eine flüssige Phase übergeht. Die Phasenumwandlung kann aber auch in der Form erfolgen, dass sich seine Gefüge- oder Kristallgitterstruktur ändert. Dabei wirkt sich die für das Aufbrechen der Gitter erforderliche Energie (Gitterenergie ΔHᵤ) vorteilhaft aus und es kann ein reduzierter Wärmeeinfluss mit kleineren auf die aktiven Additive einwirkenden Temperaturen erreicht werden. Die Hydrations- und Lösungsenthalpie kann dagegen beim Pelletierprozess vernachlässigt werden.

Das erfindungsgemäß beschichtete Granulat kann so in dosierter Form mit weiteren Zuschlagstoffen einem Pelletierprozess zugeführt werden. Die dabei zwangsweise auftretende Erwärmung der die aktiven Additive enthaltenden Kerne wird einmal durch die in Folge der zusätzlichen Beschichtung erreichbare reduzierte Wärmeleitung und zum anderen durch die Aufnahme von Wärme bei der Phasenumwandlung reduziert. Dadurch können beim und nach dem Pelletierprozess Temperaturen in den die aktiven Additive enthaltenden Kernen eingehalten werden, die unterhalb für die Aktivität der Additive kritischer Temperaturen liegen. Zumindest jedoch kann die Einwirkzeit solcher kritischer Temperaturen reduziert werden, so dass der gesamte Anteil an aktiven Additiven erhalten oder zumindest jedoch nur eine geringfügige Reduzierung dieses Anteils erreichbar ist.

Es ist dabei auch unkritisch, wenn ein Stoff oder Stoffgemisch der Beschichtung während des Pelletierprozesses vollständig oder teilweise flüssig wird und nachfolgend dann Bestandteil einer Pelletmatrix ist, in der die aktive Additive enthaltenden Kerne eingebettet werden können.

Für die Beschichtung können Stoffe oder Stoffgemische ausgewählt werden, deren Phasenumwandlungstemperatur den beim jeweiligen Pelletierungsprozess auftretenden maximalen Temperaturen angepasst sind. Außerdem kann auch die jeweilige Umwandlungswärme (latente Wärme) des jeweiligen Stoffes oder Stoffgemisches, die mindestens 150 J/g betragen sollte berücksichtigt werden. Ein weiterer Parameter kann auch die Gesamtmasse der Beschichtung sein, wenn die Beschichtung vollständig aus einem solchen Stoff oder Stoffgemisch gebildet worden oder ein Anteil eines eine Phasenumwandlung vollziehenden Stoffes oder Stoffgemisches in einer Beschichtung ist.

Dabei sollte die Beschichtung vollflächig in Form einer vollständig geschlossenen Schicht um die Kerne ausgebildet werden, um insbesondere Wärmebrücken mit erhöhter Wärmeleitung in Richtung auf aktive Additive enthaltende Kerne zu vermeiden. Die Schichtdicke der Beschichtung sollte auch unter diesem Aspekt nicht um mehr als ± 20 % um eine mittlere Schichtdicke abweichen.

Das erfindungsgemäße Granulat kann aber auch so hergestellt worden sein, dass der Anteil an aktivem Additiv von innen nach außen kleiner wird, wobei dies in kontinuierlicher gradierter Form erfolgen kann. Dementsprechend besteht die Möglichkeit sehr hohe Anteile an aktivem Additiv im Zentrum einzustellen, die sukzessive von innen nach außen reduziert werden, bis lediglich ein sehr geringer Anteil an aktivem Additiv oder keine aktiven Additive an der Oberfläche oder im oberflächennahen Bereich vorhanden sind und dementsprechend die auf der Oberfläche ausgebildete Beschichtung mit einem eine Phasenumwandlung vollziehenden Stoff oder Stoffgemischs keine aktiven Additive mehr enthält bzw. der Anteil aktiver Additive sehr klein gehalten ist.

Eine Beschichtung kann aber auch aus zwei oder mehr übereinander gebildeten Schichten auf Kernen des Granulates ausgebildet oder die Beschichtung mit mindestens zwei Stoffen und/oder Stoffgemischen, die jeweils eine Phasenumwandlung bei unterschiedlichen Phasenumwandlungstemperaturen vollziehen, gebildet sein. Dadurch kann eine quasi retardierte Wärmeaufnahme bei der jeweiligen Phasenumwandlung erreicht werden, um einen weiter verbesserten Pelletierschutz für die enthaltenen aktiven Additive bezüglich ihrer Aktivität erreichen zu können.

Der Anteil mindestens eines Stoffes oder Stoffgemisches, mit dem Beschichtungen auf aktive Additive enthaltenden Kernen ausgebildet worden sind, soll mindestens 25 Masse-%, bevorzugt mindestens 35 Masse-% des Granulats aufweisen.

Neben den erfindungsgemäß auszunutzenden Eigenschaften für eine Phasenumwandlung können die für die Beschichtung eingesetzten Stoffe oder Stoffgemische auch ernährungsphysiologisch vorteilhafte Eigenschaften in den fertig hergestellten Tiernahrungspellets hervorrufen. So können beispielsweise im jeweiligen Organismus Mineralstoffe und Spurenelemente zusätzlich zugeführt werden.

Für eine sehr dosierte Zuführung an erfindungsgemäßen Granulat in einen Pelletierprozess sollte das Granulat entweder in einer relativ gleichmäßigen Partikelgröße dem Pelletierprozess zugeführt werden oder die Zuführung eines Granulats mit einer Partikelgrößenverteilung, beispielsweise einer Gauß-Verteilung vorgenommen werden, so dass der Anteil an aktiven Additiven in den fertig hergestellten Tiernahrungspellets zumindest in bestimmten vorgebbaren Grenzen konstant gehalten werden kann.

Die bevorzugte mittlere Partikelgröße des Granulats liegt im Bereich zwischen 100 und 1500 µm und die Schwankung der Partikelgröße des Granulates sollte kleiner als plus minus 15 %, bevorzugt kleiner als 10 % und ganz besonders bevorzugt kleiner als 5 % sein.

Dadurch kann das jeweilige eine oder mehrere aktive Additiv(e) in einem Granulat mit einem Anteil größer als 30 Masse-% formuliert und das/die aktive Additiv(e) bei einem Pelletierungsprozess Temperaturen größer als 75 °C ausgesetzt werden. Dabei wird ein Pelletierungsschutz von mehr als 50 % unter Berücksichtigung des hohen Anteils an aktiven Additiv(en) erreicht. In einer bevorzugten Ausführungsform weisen die Additive enthaltenden Granulate eine Partikelgröße im Bereich von 0,2 bis 0,8 mm, weiter bevorzugt eine Partikelgröße im Bereich zwischen 0,3 und 0,6 mm bei einem Anteil an aktiven Additiven größer als 35 Masse-% auf.

Durch die geringe Partikelgröße in Kombination mit der hohen Konzentration an aktivem Additiv können neben weiteren Vorteilen auch die Kosten günstig beeinflusst werden.

In einer weiteren bevorzugten Ausführungsform ist auf dem Granulat eine zweite äußere Hüllschicht einer nicht, zumindest schwer, wasserlöslichen Komponente ausgebildet. Die nicht wasserlösliche Komponente sollte vorteilhaft ebenfalls einen Phasenübergang ausüben können. Eine weitere wesentliche Eigenschaft ist die Wasserlöslichkeit, die nicht größer als 1 g in Lösung in 100 g Wasser bei 20 °C sein sollte. Der Schmelzpunkt der nicht wasserlöslichen Komponente sollte dabei größer als 40 °C sein, um ein Ankleben von Granulaten aneinander bei Zimmertemperatur zu vermeiden. Die nicht wasserlösliche und hydrophobe Komponente kann dabei ein Paraffinwachs oder eine langkettige Fettsäure, die einen Schmelzpunkt zwischen 40 und 90 °C aufweisen, sein. Geeignete Paraffinwachse sind Pentacosan und Hexacosan. Geeignete fettige Säuren sind Caprylsäure, Laurinsäure, Palmitinsäure und Stearinsäure, die eine Wasserlöslichkeit kleiner als 1 g in Lösung in 100 g Wasser bei 20 °C aufweisen.

Allein oder zusätzlich kann aber unmittelbar auf die Oberfläche von Kernen auch eine Barriereschicht eines entsprechend ebenfalls nicht oder nur schwer in Wasser löslichem (hydrophoben) Stoffes oder Stoffgemisches ausgebildet sein, auf die dann wiederum die erfindungsgemäße Beschichtung aufgebracht wird.

Dadurch kann insbesondere der negative Einfluss von Feuchtigkeit, insbesondere von Wasserdampf, wie er bei dem Pelletierprozess auftritt berücksichtigt werden und so auch die aktiven Additive besser geschützt werden.

Neben den bereits bezeichneten geeigneten Stoffen kann dies auch mit PVA, als einem geeigneten Stoff erreicht werden.

In einer weiteren bevorzugten Ausführungsform ist der Stoff bzw. das Stoffgemisch für die Beschichtung, der eine Phasenumwandlung vollzieht, eine anorganische Komponente mit einer Temperatur, bei der der Phasenwechsel auftritt, die im Bereich zwischen 105 und 120 °C liegt. Geeignete Stoffe oder Stoffgemische sind hier Salzhydrate und Mischungen davon. Dies sind beispielsweise MgSO₄.7 H₂O mit einer Latentwärme (Umwandlungswärme) von 160 J/g, CaCl₂.6 H₂O mit einer Latentwärme von 170 J/g, ZnSO₄.6 H₂O mit einer Latentwärme von 150 J/g, NaC₂O₂H₃.3 H₂O mit einer Latentwärme von 240 J/g.

Hydrierte Carbonate, Phosphate, Citrate, Acetate und Mischungen dieser einen Anteil an eingelagertem Kristallwasser aufweisenden Salze sind ebenfalls geeignete Stoffe, die entsprechende Temperaturen mit Phasenwechselübergängen im bezeichneten Temperaturintervall aufweisen.

Natriumacetattrihydrat ist am Besten geeignet, da es eine hohe Latentwärme (Umwandlungswärme) aufweist. Dadurch kann eine geringe Beschichtung mit kleiner Schichtdicke und Schichtvolumen bereits einen guten Schutz während des Pelletierungsprozesses für die in den Granulen enthaltenen aktiven Additive mit hohem Anteil gewährleisten. Weitere geeignete anorganische Stoffe sind Zeolithe und Mischungen von Metalloxiden (z. B. Na₂SiO₃.9H₂O, NAl (SO₄)₂12H₂O, KFe(SO₄)₃H₂O). Mischungen von hydrierten Salzen und Mischungen von Metalloxiden sind besonders geeignet mit einer Phasenübergangstemperatur im Bereich der Temperaturen die beim Pelletierprozess einwirken. Die Phasenübergangstemperaturen dieser Stoffe oder Mischungen davon können im Bereich zwischen 105 und 120 °C eingehalten und auch eingestellt werden, die während des gesamten Pelletierungsprozesses, also von seinem Beginn bis zu seinem Ende, einwirken.

In einer weiteren bevorzugten Ausführung der Erfindung kann der für die Beschichtung genutzte Stoff bzw. ein benutztes Stoffgemisch auch eine organische Komponente sein. Geeignete organische Komponenten sind fettige Säuren mit Phasenübergangstemperaturen im Bereich zwischen 30 und 120 °C. Bevorzugte fettige Säuren sind Caprylsäure, Laurinsäure, Palmitinsäure und Stearinsäure. Ebenfalls geeignet sind Paraffinwachse, wie beispielsweise Pentacosan, Hexacosan und Heptacosan. Diese organischen Stoffe haben eine latente Wärme (Umwandlungswärme) größer als 150 J/g.

In einer weiteren bevorzugten Ausführung wird als aktives Additiv ein Enzymprotein eingesetzt. Das Enzym hat dann eine Phytaseaktivität, eine Xylanaseaktivität, eine B-Glucanaseaktivität und/oder eine Proteaseaktivität. Die Enzyme können mit einem geeigneten Stabilisator stabilisiert sein. Dies kann ein kleiner Anteil an Zinksulfat und/oder Magnesiumsulfat, die in einem Enzym enthaltenem Kern eingebettet sind.

In einer weiteren Ausführungsform der Erfindung als aktives Additiv zusätzlich oder allein kann auch ein Vitamin oder mehrere Vitamine enthalten sein. Bevorzugt kann dies Vitamin C und/oder ein Vitamin C-Derivat, wie ein Natriumascorbat, das sehr empfindlich bei den Pelletierungstemperaturen ist, sein.

In einer weiteren Ausführungsform kann das aktive Additiv auch ein Caritonioid, wie beispielsweise β-Carotin oder ein Carotinoidderivat, wie beispielsweise Xanthin sein.

Das Granulat kann aber auch erfindungsgemäß hergestellt werden. Dabei soll beim Herstellungsprozess ein Kern mit einer mittleren Partikelgröße im Bereich zwischen 0,1 und 1,5 mm, in dem mindestens 30 Masse-%, bevorzugt mindestens 35 Masse-% an aktiven Additiven enthalten sind, hergestellt werden, die nachfolgend an ihrer Oberfläche zu beschichten sind. Die Beschichtung soll mindestens einen Stoff oder ein Stoffgemisch aufweisen, der/das im Temperaturintervall zwischen 30 und 120 °C einen Phasenübergang vollzieht. Die Herstellung der Kerne erfolgt dabei bevorzugt in der Form, wie dies in DE 103 26 231 A1 beschrieben ist. Die so hergestellten Kerne weisen einen geringen Anteil an destabilisierten aktiven Additiven auf, da die Zeitdauer, bei der sie erhöhten Temperaturen während des Granulationsprozesses ausgesetzt sind, gering ist. Die Beschichtung der Kerne mit dem einen Phasenübergang vollziehenden Stoff/Stoffgemisch kann in herkömmlicher Form in einem Wirbelbett erfolgen.

So kann das erfindungsgemäße aktive Additive enthaltende Granulat so hergestellt werden, dass erwärmtes Prozessgas über eine Zuluftkammer von unten über Spaltöffnungen in einen Prozessraum in Form von Gasstrahlen zugeführt wird. Das aus der Zuluftkammer in den Prozessraum eingeführte Prozessgas sollte dabei mittels eines Umlenkteils nach oben in den Prozessraum umgelenkt werden und in Form eines Freistrahles ausgebildet sein. Günstig wirkt es sich aus, wenn der Querschnitt innerhalb des Prozessraumes ausgehend von unten nach oben vergrößert ist, so dass sich die Strömungsgeschwindigkeit des Prozessgases in diese Richtung verringert.

Das Prozessgas kann oberhalb des Prozessraumes über ein Abluftteil abgezogen werden, wobei im Abluftteil eine Entstaubung integriert sein kann.

Innerhalb des Prozessraumes werden Partikel mit dem Gasstrahl mitgerissen und im oberen Teil durch die reduzierte Strömungsgeschwindigkeit treten sie aus dem Gasstrahl seitlich aus und fallen in den Prozessraum zurück.

Im unteren Bereich ist der Prozessraum sich in diese Richtung verjüngend ausgebildet, so dass die Partikel in Folge der Gravitationskraft wieder in Richtung auf den Gaseintrittsspalt bewegt werden und im Anschluss vom Gasstrahl erneut in den Prozessraum mitgerissen werden.

So kann eine gleichförmige Partikelzirkulation innerhalb des Prozessraumes erreicht werden. Dadurch liegt in einer Kernzone des Prozessraumes oberhalb eines Umlenkteiles auch bei geringem Feststoffanteil eine hohe Partikeldichte vor.

Mittels mehrerer Sprühdüsen kann eine Flüssigkeit nach oben in diesen Bereich mit hoher Partikeldichte eingedüst werden. Dabei kann in der Flüssigkeit das eine aktive Additiv oder auch mehrere aktive Additive enthalten sein, wobei dies in Form einer Suspension oder auch als Lösung möglich sein kann.

In Folge der hohen Partikeldichte in diesem Bereich in den die Flüssigkeit eingedüst wird, können vorteilhafte Bedingungen für den Wärme- und Stoffübergang erreicht werden. Es ist außerdem möglich, dass sich die Flüssigkeit zu großen Teilen auf der Oberfläche der Partikel abscheidet und ein gleichmäßiger Flüssigkeitsfilm ausgebildet werden kann.
Die Flüssigkeit kann mittels des erwärmten Prozessgases verdampft werden und kann den Prozessraum gasförmig verlassen.

So erhöht sich die Partikelgröße gleichförmig und homogen, so dass eine geringe Partikelgrößenverteilung erreichbar ist.
Die bereits angesprochene Entstaubung kann mittels Druckluftimpulsen betrieben werden, so dass auch bereits gebildete Partikel aus der Entstaubung separiert und in den Prozessraum rückgeführt werden können.

Bei einer solchen Vorgehensweise und der entsprechenden Anlagentechnik können insbesondere gegenüber der an sich bekannten Wirbelschichttechnik eine lokal begrenzte Prozessgasströmung eingestellt und eine verbesserte Zirkulation durch Mitreißen von gebildeten Partikeln mit dem Gasstrahl und das daran anschließende Absinken erreicht werden.

Bedingt durch die Strömungsgeschwindigkeit des austretenden Gasstrahles im Bereich eines Gaseintrittsspaltes werden die feinen Partikel angesaugt, mitgerissen und einer Bedüsungszone zugeführt, in der das Benetzen der Oberflächen mit Flüssigkeit erfolgen kann.

Zusätzlich können auch Zuführungen für Feststoffe vorgesehen sein, durch die beispielsweise als Feststoff vorliegende aktive Additive in den Prozess zugeführt werden können.

Außerdem können auch vorab zerkleinerte, in dem Prozess vorab gebildete Partikel zurückgeführt werden, um erneut mit Flüssigkeit benetzt zu werden, so dass die jeweils gewünschte Partikelgrößenfraktion eingehalten werden kann.

Ein wesentlicher Punkt, bei der Partikelbildung besteht darin, dass im Gasstrahl in axialer Richtung des Prozessraumes eine kreisähnliche Feststoffströmung erzeugt wird.
Bei der Herstellung eines Granulats in dem aktive Additive mit entsprechend hohem Anteil enthalten sind, kann aber auch auf die Wirbelschichttechnik zurückgegriffen werden, wie dies insbesondere auch in WO 01/83727 A2, auf deren Offenbarungsgehalt voll umfänglich Bezug genommen werden soll, zurückgegriffen werden.

Dabei sollte die aktive Additive enthaltende Flüssigkeit möglichst von unten in ein Wirbelschichtbett eingedüst werden.

Dabei kann ähnlich, wie vorab bereits beschrieben das Granulat mit einer bestimmten vorgebbaren Partikelgröße gebildet und eine Trocknung mittels der Gasströmung innerhalb eines Wirbelschichtbettes erfolgen.

Auch eine Rückführung von mittels einer Entstaubung separierter kleiner Partikel in ein Wirbelschichtbett ist bei einer solchen Lösung möglich.

Im Übrigen kann auch so verfahren werden, dass wie vorab bereits erläutert, der Anteil an aktiven Additiven in der Flüssigkeit und ggf. auch ein Anteil eines Stoffes oder Stoffgemisches, der eine Phasenumwandlung vollziehen kann, variiert werden.

Bei der Herstellung kann auch so verfahren werden, dass der Anteil an aktivem Additiv in einer Flüssigkeit, mit der die Oberflächen von Partikeln benetzt wird nach und nach reduziert wird, wobei die Reduzierung kontinuierlich erfolgen kann. Dadurch kann der jeweilige Anteil an aktivem Additiv innerhalb der Partikel/Kerne von innen nach außen reduziert werden.

Gleichzeitig kann aber auch der Anteil an mindestens einem Stoff oder Stoffgemisch, der die gewünschte Phasenumwandlung vollzieht innerhalb der Flüssigkeit erhöht werden, so dass sich die erfindungswesentliche Beschichtung auf der Oberfläche von Granulaten ausbilden kann.

So kann beispielsweise am Ende des Herstellungsprozesses Flüssigkeit in den Prozessraum eingeführt werden, in der keine aktiven Additive mehr enthalten sind und dadurch eine Oberflächenschicht mit dem jeweiligen Stoff oder Stoffgemisch, der/das eine Phasenumwandlung vollzieht, die frei von aktivem Additiv ist, gebildet werden kann.

Es besteht aber auch die Möglichkeit, die innerhalb des Prozesses gebildeten Partikel, also aktive Additive enthaltende Kerne mit einem hohen Additivanteil aus dem Prozess abzuziehen und nachfolgend mit einer Beschichtung zu versehen, die mit einem entsprechend erfindungswesentlichen Stoff oder Stoffgemisch gebildet ist. Dies kann dann beispielsweise in einer herkömmlichen Wirbelschichtanlage durchgeführt werden.

### Analytische Verfahren

Die Phasenübergangstemperaturen und latente Wärme (Umwandlungswärme) des Beschichtungsstoffes/Stoffgemisches wurden mit einem Gerät Mettler Toledo Star SW7.01 nach dessen Standardhandbuch durchgeführt. Die Aktivität des Enzyms Phytase, das dabei eingesetzt wurde, wurde mit Natriumphytat, als Substrat durch Bestimmung der Phosphorfreisetzung bestimmt. Die Phytaseaktivität wird als FTU ausgedrückt und definiert den Wert der Substratfreisetzung 1 µmol des Phosphats pro Minute ausgehend von 5,1 µmol an Phosphat pro Minute von einem 5.1 mM Natriumphytat bei 37° C und einem pH-Wert von 5,5.

Die Bestimmung von Enzymprotein wurde mit dem Kjelldalverfahren unter Einsatz eines Standardumwandlungsfaktors für Protein von 6,25 durchgeführt. Die Enzymprobe wurde über eine geeignete Membran ultrafiltriert, um das Enzym zu separieren und den nicht enzymatischen Stickstoff mit kleinerem Molekulargewicht zu entfernen.

Das Vitamin C oder der Ascorbinsäureanteil im Granulat wurde wie folgt bestimmt:

Die Probe lag im Ausgangszustand als feines Pulver vor. Eine Extraktionslösung wurde durch Mischung von 100 ml Methanol, 20 ml einer 0,1 % wässrigen Oxalsäurelösung und 200 ml Benzol hergestellt. Das feine Pulver wurde mit 250 ml dieser Lösung extrahiert. 50 ml des Extraktes wurden mit 25 ml einer 0,1 % Oxalsäurelösung vermischt und über einen Zeitraum von ca. 1 Minute geschüttelt und dann abgesetzt. Nach dem Absetzen wurden 2 ml der organischen Phase entfernt und der Ascorbinsäureanteil durch eine Titration mit einer 0,001 Lösung aus Natriumsalz und 2,6-Dichlorophenolindo-Phenol, die vorab gegen Natriumascorbatlösung mit bekannter Konzentration standarisiert wurde, entfernt.

Aus diesen Titrationsdaten wurde der Ascorbinsäureanteil der Probe bestimmt. Die mittlere Partikelgröße der die aktiven Additive enthaltenden Granulate wurde mittels einer Siebanalyse bestimmt.

Nachfolgend soll die Erfindung beispielhaft näher erläutert werden, wobei die Beispiele die Erfindung erklären und nicht unbedingt einschränken sollen.

### Beispiel 1:

Ein kommerziell erhältliches Phytasekonzentrat (Natuphos 5000 L, BASF, Ludwigshafen, Deutschland) wurde mit demineralisierten Wasser über einen Ultrafilter mit einer Porengröße, die verhindert, dass Enzyme hindurch treten, filtriert um Konservierungsmittel und andere niedrig molekulare Substanzen zu entfernen. Das Enzymkonzentrat, das nach der Ultrafiltration erhalten wurde, hatte einen hohen Anteil an Enzym in Lösung. Der konzentrierten Enzymlösung mit 30 % Trockenanteil und einer Phytaseaktivität von 24 000 FTU/g wurden Polyvinylalkohol und Maltodextrin als Binder und Zinksulfat als ein Enzymstabilisator mit einem Anteil von 1 Masse-%, 5 Masse-% und 1,3 Masse-% zugegeben. Die konzentrierte Enzymlösung wurde dann in ein Sprühbett eingeführt, wie es bei einer Anlage, die von der Firma Glatt GmbH unter der Handelsbezeichnung ProCell erhältlich ist. Das entsprechende Herstellungsverfahren für solche enzymenthaltenden Kerne ist in der DE 103 26 231 A1 beschrieben, auf deren Offenbarungsgehalt hier voll umfänglich zurückgegriffen werden soll. Die Einlasslufttemperatur lag bei 105 °C und die Auslasstemperatur war 55 °C. Die Pulverpartikel, die eine Partikelgröße kleiner als 200 µm aufwiesen, wurden in das Sprühbett zurückgeführt und Partikel mit einer Partikelgröße größer als 600 µm wurden entfernt und gesiebt. Die so erhaltenen Kerne hatten eine Enzymaktivität von 72 000 FTU/g, einen Anteil an aktiven Enzymproteinen von 82 Masse-% und eine mittlere Partikelgröße von 300 µm.

Die so hergestellten Kerne wurden in einer Glatt Wirbelschichtanlage mit einer 50 Masse-%-Lösung von ZnSO₄.6H₂O in das Wirbelbett eingeführt. Die Kerne wurden so mit 47 g von ZnSO₄.6H₂O pro 100 g der Kerne beschichtet. Das so beschichtete Granulat hatte eine Aktivität von 37 800 FTU/g und einen Anteil an aktiven Enzymproteinen von 43 Masse-%. Die mittlere Partikelgröße des Granulats lag nach diesem Prozess bei 400 µm. ZnSO₄.6H₂O hat eine Latentwärme von mehr als 200 kJ/kg.

### Beispiel 2:

Das Granulat nach Beispiel 1 wurde dann mit einer zweiten Beschichtung einer flüssigen Stearinsäure in einer Glatt Wirbelbettanlage von oben besprüht und beschichtet. Die Löslichkeit der Stearinsäure in Wasser bei 20 °C lag bei 0,00029 g/100g in Wasser. Die Aktivität dieses doppelt beschichteten Granulats erreichte 28 900 FTU/g und der Anteil an aktiven Phytaseenzymprotein im zweifach beschichteten Granulat lag bei 33 Masse-%. Die mittlere Partikelgröße lag bei ca. 450 µm.

### Nahrungsmittelpelletiertest I

Der Kern und das Granulat, nach Beispiel 1 und das zweifach beschichtete Granulat nach Beispiel 2 wurden mit einer herkömmlichen Probe eines Nahrungsmitteladditivgranulats Rhonozyme P 2500 CT zu einer Tiernahrungsmittelmischung vermischt. Das Rhonozyme 2500 CT hatte eine Aktivität von 3490 FTU/g und einen relativen Anteil an Enzymproteinen unterhalb 20 Masse-%.

Die Tiernahrungsmittelzusammensetzung ist in der Tabelle 1 zusammengefasst. Diese Tiernahrungsmittelzusammensetzung wurde in einer Presse pelletiert, wobei mit Dampf auf eine Temperatur von 85 °C aufgeheizt wurde. Nach dem Pressen lag eine Temperatur von 84 °C an den hergestellten Pellets vor.

**Tabelle 1: Tiernahrungsmittelzusammensetzung**

| Inhaltsstoff | % wt/wt |
|---|---|
| Mais | 42,97 |
| Sojabohnenmehl | 32,23 |
| Tapioca 65% Stärke | 47,50 |
| Tierfett | 1,39 |
| Kalkstein | 0,54 |
| Monocalciumphosphat | 0,68 |
| Vitamine und Spurenelemente | 1,00 |
| Lysin 25% premix | 0,12 |
| Lasalocid premix | 0,50 |
| Salz | 0,12 |
| TOTAL | 100 |

Der erreichte Pelletierschutz für aktive Phytase ist in Tabelle 2 angegeben.

**Tabelle 2:**

| | Kern | Granulat mit Beschichtung | Granulat mit Hüllschicht | Rhonozyme P 2500 CT |
|---|---|---|---|---|
| Phytaseaktivität | 72000 | 37800 | 28900 | 3490 |
| FTU/g | | | | |
| Enzymanteil | 82 % | 43 % | 33 % | < 25 % |
| Protein % wt/wt | | | | |
| Beschichtung | Nein | Ja | Ja | |
| Beschichtungsstoff | | ZnSO₄.6H₂O | Stearinsäure | |
| Enzymaktivität | 4000 | 3000 | 3350 | 3900 |
| FTU/g | | | | |
| Enzymaktivität in | 890 | 1600 | 2500 | 2850 |
| Pellets FTU/g | | | | |
| Pelletierschutz % | 22,3 % | 53,3 % | 74,6 % | 73,1 % |

### Beispiel 3:

Der gleiche Kern gemäß Beispiel 1 wurde mit einer Mischung von 55 Masse-% ZnSO₄.6H₂O und 45 Masse-% Kaolinpulver beschichtet. Dabei wurde wie beim Beispiel 1 verfahren. Das so erhaltene Granulat hatte eine Aktivität von 35 650 FTU/g und einen Anteil an Enzymproteinen von 41 Masse-%, bei einer mittleren Partikelgröße von 400 µm. Die Masse der Beschichtung lag bei 46 g auf 100 g des gesamten Granulats.

### Beispiel 4:

Ins Granulat nach Beispiel 3 wurde mit einer Emulsion eines Paraffins mit einer Löslichkeit unterhalb von 0,0001 g in 100 g Wasser bei 20 °C beschichtet. Das Paraffin hatte eine latente Wärme von 174 kJ/kg und eine Schmelztemperatur von 43 °C. Die Masse der Paraffinbeschichtung hatte einen Wert von 5g pro 100g des doppelt beschichteten Granulates. Das doppelt beschichtete Granulat hatte eine mittlere Partikelgröße von 400 µm.

### Beispiel 5

Kerne nach Beispiel 1 wurden mit einer Mischung von 50 Masse-% Natriumacetathydrat, das eine latente Wärme von 220 kJ/kg bei einer Phasenübergangstemperatur von 47 °C und 50 Masse-% Zeolith beschichtet. Die Beschichtung hatte eine Masse von 30 g pro 100 g des beschichteten Granulats. Das so beschichtete Granulat hatte eine mittlere Partikelgröße von 400 µm und einen Anteil an aktiven Enzymproteinen von 57 Masse-%.

### Beispiel 6

Das beschichtete Granulat nach Beispiel 5 wurde mit einer Emulsion eines Paraffins gemäß Beispiel 4 beschichtet. Die Masse des Paraffins für die Beschichtung hatte eine Masse von 5 g auf 100 g eines doppelt beschichteten Granulats.

### Beispiel 7

Ein Kern aus 85 Masse-% Natriumascorbat und 10 Masse-% Maltodextrin mit 5 % Feuchtigkeit wurden gemäß dem ProCellverfahren, wie es bei den Kernen nach Beispiel 1 erläutert worden ist, hergestellt. Das Verfahren liefert Kerne mit einem hohen aktiven Enzymgehalt und ist in DE 103 26 231 A1 beschrieben. Kerne wurden mit einer wässrigen Lösung von Natriumacetattrihydrat beschichtet, um eine Beschichtung aus Natriumacetattrihydrat mit einem Anteil von 30 Masse-% der beschichteten Granulate zu erhalten. Das Granulat wurde mit einer Paraffinemulsion, gemäß vorab beschriebener Beispiele beschichtet, um aktive Additive enthaltendes Granulat zur Verfügung zu stellen, wobei die Paraffinbeschichtung einen Anteil von 5 Masse-% an den doppelt beschichteten Granulaten hatte.

### Pelletiertest II

Die Kerne nach Beispiel 1 und Beispiel 7 sowie das Granulat gemäß der Beispiele 3 bis 7 wurden einer kommerziell erhältlichen Probe des Nahrungsmittelgranulats Rhonozyme P 2500 CT und einer Probe des Nahrungsmittelgranulats Natuphos 5000 G zu einer Tiernahrungsmischung vermischt.

Das herkömmliche Granulat Rhonozyme P 2500 CT hatte eine Aktivität von 3500 FTU/g und das Natuphos 5000 G hatte eine Aktivität von 6420 FTU/g. Beide hatten einen relativen Anteil an Enzymproteinen von 20 Masse-% des Granulats. De Anteil an aktiven Enzymproteinen weist einen direkten Bezug zum Aktivitätswert auf.

Die Nahrungsmittelzusammensetzung geht aus Tabelle 1 hervor.

Diese Tiernahrungsmittelzusammensetzung wurde in einer Pelletierpresse pelletiert, wobei die Pelletiermasse mit Dampf auf eine Temperatur zwischen 84 und 86 °C aufgeheizt worden ist. Nach dem Pressen hatten die hergestellten Pellets eine Temperatur im Bereich zwischen 85 °C und 87 °C.

| | Kern Bsp. | Bsp. | Bsp. | Bsp. | Kern Bsp. | Bsp. | Rhonozyme P 2500 CT | Natuphos |
|---|---|---|---|---|---|---|---|---|
| | 1 | 4 | 5 | 6 | 7 | 7 | | 5000 G |
| Phytaseaktivität | 72000 | 35250 | 41030 | 83368 | | | 3340 | 6420 |
| Enzymprotein | 82 % | 40 % | 57 % | 44 % | | | < 30 % | < 30% |
| Anteil % wt/wt | | | | | | | | |
| Beschichtung | Nein | Ja | Ja | Ja | Nein | Ja | | |
| Ascorbatanteil % | | | | | 85 % | 62 % | | |
| Pelletierschutz | 42 % | 73 % | 69 % | 89 % | 49 % | 92 % | 87 % | 83 % |

In allen Fällen hatte das erfindungsgemäße Granulat einen Anteil an aktiven Additiven größer als 30 Masse-% und einen Pelletierschutz oberhalb 53 %. Herkömmliches alternatives Granulat oder Kerne erreichten lediglich einen Anteil an aktiven Additiven unterhalb 30 Masse-% und/oder eine Pelletierstabilität unterhalb von 49 % bei vergleichbaren Pelletiertests.

## Patentansprüche

1. Verfahren zur Herstellung von Granulat für Tiernahrungspellets, **dadurch gekennzeichnet dass**, eine mindestens ein aktives Additiv enthaltende Flüssigkeit über mindestens eine Sprüheinrichtung in einen Gasstrahl oder ein Wirbelschichtbett, in dem Partikel bewegt werden, eingedüst wird;
die mit der Flüssigkeit benetzten Partikel mittels erwärmten Prozessgas im Gasstrahl oder Wirbelschichtbett getrocknet und granuliert werden,
und mit steigender Partikelgröße des gebildeten Granulates der Anteil an aktivem Additiv in der Flüssigkeit reduziert und der Anteil eines eine Phasenumwandlung im Temperaturbereich zwischen 30 und 120 °C vollziehenden Stoffes oder Stoffgemisches in der Flüssigkeit erhöht wird oder
aus den Partikeln gebildete Kerne, in denen mindestens ein aktives Additiv mit einem Anteil von mindestens 25 Masse-% enthalten ist, nachfolgend mit einer äußeren Beschichtung eines Stoffs oder Stoffgemisches der/das eine Phasenumwandlung im Temperaturbereich zwischen 30 und 120 °C vollzieht, ausgebildet wird.

2. Verfahren nach Anspruch 1, **dadurch gekennzeichnet, dass** der Anteil an aktivem Additiv in der Flüssigkeit auf 0 Masse-% reduziert und auf dem fertigen Granulat eine von aktivem Additiv freie Beschichtung mit dem eine Phasenumwandlung vollziehenden Stoff oder Stoffgemisch gebildet wird.

3. Verfahren nach Anspruch 1 oder 2, **dadurch gekennzeichnet, dass** die Partikel nach einer vorgebbaren Verweilzeit aus dem Gasstrahl separiert und in einen Prozessraum rückgeführt werden,
die separierten Partikel dann einem Gaseintrittsbereich zugeführt und im Gasstrahl eine in axialer Richtung des Prozessraumes liegende kreisähnliche Feststoffströmung erzeugt wird.

4. Verfahren nach einem der vorhergehenden Ansprüche, **dadurch gekennzeichnet, dass** die Flüssigkeit in dass Wirbelschichtbett von unten eingedüst wird.

5. Verfahren nach einem der vorhergehenden Ansprüche, **dadurch gekennzeichnet, dass** mittels einer Entstaubung separierte kleine Partikel rückgeführt werden.

6. Verfahren nach einem der vorhergehenden Ansprüche, **dadurch gekennzeichnet, dass** mindestens ein aktives Additiv enthaltende Kerne aus dem Prozess entfernt und nachfolgend eine Beschichtung eines eine Phasenumwandlung vollziehenden Stoffes oder Stoffgemisches auf der Oberfläche der Kerne ausgebildet wird.

7. Verfahren nach einem der vorhergehenden Ansprüche, **dadurch gekennzeichnet, dass** die Beschichtung in einem Wirbelbettverfahren ausgebildet wird.

8. Verfahren nach einem der vorhergehenden Ansprüche, **dadurch gekennzeichnet, dass** auf der Beschichtung eine Hüllschicht mit einem hydrophoben Stoff oder Stoffgemisch ausgebildet wird.

9. Granulat hergestellt mit einem Verfahren nach einem der Ansprüche 1 bis 8, **dadurch gekennzeichnet, dass** das Granulat mit mindestens 25 Masse-% mindestens eines aktiven Additivs enthaltendem Kern gebildet ist, dabei
die Kerne mit einem Stoff oder Stoffgemisch beschichtet sind,
der/das mindestens eine Beschichtung bildende Stoff oder Stoffgemisch eine Phasenumwandlung im Temperaturbereich zwischen 30 und 120 °C vollzieht und
eine Umwandlungswärme von mindestens 150 J/g aufweist oder bei der Phasenumwandlung sich die Gefüge- oder Kristallstruktur des Stoffs oder Stoffgemischs ändert und
der Stoff oder das Stoffgemisch einen Anteil des Granulats von mindestens 25 Masse-% ausmacht.

10. Granulat nach Anspruch 9, **dadurch gekennzeichnet dass**, mindestens 30 Masse-% mindestens eines aktiven Additivs enthalten sind.

11. Granulat nach Anspruch 9 oder 10, **dadurch gekennzeichnet, dass** das Granulat eine Partikelgröße von 100 bis 1500 µm aufweist.

12. Granulat nach einem der Ansprüche 9 bis 11, **dadurch gekennzeichnet, dass** die Beschichtung in Form einer vollflächigen, vollständig geschlossenen Schicht um Kerne ausgebildet ist.

13. Granulat nach einem der Ansprüche 9 bis 12, **dadurch gekennzeichnet, dass** die Schichtdicke der Beschichtung um eine mittlere Schichtdicke um maximal ± 20 % abweicht.

14. Granulat nach einem der Ansprüche 9 bis 13, **dadurch gekennzeichnet dass**, die Beschichtung mit mindestens zwei Stoffen und/oder Stoffgemischen, die eine Phasenumwandlung bei unterschiedlichen Phasenumwandlungstemperaturen vollziehen, gebildet ist.

15. Granulat nach einem der Ansprüche 9 bis 14, **dadurch gekennzeichnet, dass** die Beschichtung aus zwei oder mehr übereinander gebildeten Schichten gebildet ist, und die Schichten aus unterschiedlichen Stoffen oder Stoffgemischen gebildet sind.

16. Granulat nach einem der Ansprüche 9 bis 15, **dadurch gekennzeichnet, dass** als aktive Additive Vitamine, Antioxidanten, Farbstoffe und/oder Enzyme in den Kernen enthalten sind.

17. Granulat nach einem der Ansprüche 9 bis 16, **dadurch gekennzeichnet, dass** die Beschichtung mit einem Stoff oder Stoffgemisch ausgewählt aus einem Salzhydrat, einem einen eingelagerten Kristallwasseranteil aufweisenden Carbonat, Phosphat, Citrat, Acetat, einem Zeolith und/oder Metalloxid gebildet ist.

18. Granulat nach einem der Ansprüche 9 bis 17, **dadurch gekennzeichnet, dass** die Beschichtung mit einer Fettsäure und/oder Paraffinwachs gebildet ist.

19. Granulat nach einem der Ansprüche 9 bis 18, **dadurch gekennzeichnet, dass** auf der Beschichtung eine weitere Hüllschicht eines hydrophoben Stoffes oder Stoffgemisches ausgebildet ist.

20. Granulat nach einem der Ansprüche 9 bis 19, **dadurch gekennzeichnet, dass** zwischen der Oberfläche des Kerns und der Beschichtung eine aus einem hydrophoben Stoff oder Stoffgemisch gebildete Barriereschicht ausgebildet ist.

21. Granulat nach einem der Ansprüche 9 bis 20, **dadurch gekennzeichnet, dass** der hydrophobe Stoff ein Paraffinwachs und/oder eine langkettige Fettsäure ist.

22. Granulat nach einem der Ansprüche 9 bis 21, **dadurch gekennzeichnet dass**, der Anteil an aktivem Additiv von innen nach außen reduziert ist.

## Claims

1. A method of producing granules for animal feed pellets, **characterised in that** a liquid containing at least one active additive is sprayed via at least one spraying means into a gas jet or a fluidised bed in which particles are moved;
the particles wetted with the liquid are dried by means of heated process gas in the gas jet or fluidised bed and granulated,
and with increasing particle size of the resulting granules the proportion of active additive in the liquid is reduced and the proportion of a substance or substance mixture which carries out a phase transition in the temperature range between 30 and 120°C in the liquid is increased or
cores formed from the particles, in which at least one active additive is contained in a proportion of at least 25 mass percent, are subsequently formed with an outer coating of a substance or substance mixture which carries out a phase transition in the temperature range between 30 and 120°C.

2. A method according to Claim 1, **characterised in that** the proportion of active additive in the liquid is reduced to 0 mass percent and a coating free from active additive is formed on the finished granules with the substance or substance mixture which carries out a phase transition.

3. A method according to Claim 1 or 2, **characterised in that** the particles after a pre-settable dwell time are separated out of the gas jet and are returned into a process chamber, the separated particles are then supplied to a gas entry region and a solids stream which is similar to a circle and lies in the axial direction of the process chamber is generated in the gas jet.

4. A method according to one of the preceding claims, **characterised in that** the liquid is sprayed into the fluidised bed from below.

5. A method according to one of the preceding claims, **characterised in that** small particles separated by means of a dust-removal stage are returned.

6. A method according to one of the preceding claims, **characterised in that** cores containing at least one active additive are removed from the process and subsequently a coating of a substance or substance mixture which carries out a phase transition is formed on the surface of the cores.

7. A method according to one of the preceding claims, **characterised in that** the coating is formed in a fluidised-bed process.

8. A method according to one of the preceding claims, **characterised in that** a covering layer with a hydrophobic substance or substance mixture is formed on the coating.

9. Granules produced with a method according to one of Claims 1 to 8, **characterised in that** the granules are formed with at least 25 mass percent of core containing at least one active additive, in so doing
the cores are coated with a substance or substance mixture,
the substance or substance mixture which forms at least one coating carries out a phase transition in the temperature range between 30 and 120°C and
has a heat of transition of at least 150 J/g or upon the phase transition the structural conditions or crystal structure of the substance or substance mixture changes and
the substance or the substance mixture makes up a proportion of the granules of at least 25 mass percent.

10. Granules according to Claim 9, **characterised in that** at least 30 mass percent of at least one active additive are contained therein.

11. Granules according to Claim 9 or 10, **characterised in that** the granules have a particle size of 100 to 1500 µm.

12. Granules according to one of Claims 9 to 11, **characterised in that** the coating is in the form of a full-surface, completely closed layer around cores.

13. Granules according to one of Claims 9 to 12, **characterised in that** the layer thickness of the coating deviates by a maximum of ± 20% around an average layer thickness.

14. Granules according to one of Claims 9 to 13, **characterised in that** the coating is formed with at least two substances and/or substance mixtures which carry out a phase transition at different phase transition temperatures.

15. Granules according to one of Claims 9 to 14, **characterised in that** the coating is formed from two or more layers formed one above the other, and the layers are formed of different substances or substance mixtures.

16. Granules according to one of Claims 9 to 15, **characterised in that** vitamins, antioxidants, colourings and/or enzymes are contained as active additives in the cores.

17. Granules according to one of Claims 9 to 16, **characterised in that** the coating is formed with a substance or substance mixture selected from a salt hydrate; a carbonate, phosphate, citrate, acetate having an incorporated content of water of crystallisation; a zeolite and/or metal oxide.

18. Granules according to one of Claims 9 to 17, **characterised in that** the coating is formed with a fatty acid and/or paraffin wax.

19. Granules according to one of Claims 9 to 18, **characterised in that** a further covering layer of a hydrophobic substance or substance mixture is formed on the coating.

20. Granules according to one of Claims 9 to 19, **characterised in that** a barrier layer formed of a hydrophobic substance or substance mixture is formed between the surface of the core and the coating.

21. Granules according to one of Claims 9 to 20, **characterised in that** the hydrophobic substance is a paraffin wax and/or a long-chained fatty acid.

22. Granules according to one of Claims 9 to 21, **characterised in that** the proportion of active additive is reduced from the inside towards the outside.

## Revendications

1. Procédé pour la préparation de granulé pour des pastilles pour alimentation animale, **caractérisé en ce qu'**un liquide contenant au moins un additif actif est injecté par au moins un dispositif de pulvérisation dans un jet de gaz ou dans un lit fluidisé, dans lesquels les particules sont déplacées ;
**en ce que** les particules mouillées par le liquide sont séchées et granulées dans le jet de gaz ou dans le lit fluidisé au moyen de gaz de process chauffé,
et qu'à taille croissante des particules du granulé formé, on réduit la proportion de l'additif actif dans le liquide et qu'on accroît la proportion dans le liquide d'une substance ou d'un mélange de substances exécutant un changement de phase dans l'intervalle de température entre 30 et 120 °C ou
**en ce que** des noyaux, dans lesquels au moins un additif actif est contenu avec une proportion d'au moins 25 % en masse, sont formés ensuite à partir des particules avec un revêtement extérieur d'une substance ou d'un mélange de substances qui exécute un changement de phase dans l'intervalle de température entre 30 et 120 °C.

2. Procédé selon la revendication 1, **caractérisé en ce que** la proportion d'additif actif dans le liquide est réduite à 0 % en masse et **en ce que** sur le granulé fini est formé un revêtement exempt de l'additif actif en la substance ou le mélange de substances exécutant un changement de phase.

3. Procédé selon la revendication 1 ou 2, **caractérisé en ce que** les particules sont séparées du jet de gaz après un temps de séjour spécifiable et sont renvoyées dans une chambre de process,
**en ce que** les particules séparées sont ensuite acheminées dans une zone d'entrée du gaz et **en ce qu'**un écoulement de solide en cercle ayant lieu dans la direction axiale de la chambre de process est produit dans le jet de gaz.

4. Procédé selon l'une quelconque des revendications précédentes, **caractérisé en ce que** le liquide est injecté dans le lit fluidisé par le bas.

5. Procédé selon l'une quelconque des revendications précédentes, **caractérisé en ce que** de petites particules séparées sont recyclées au moyen d'un dépoussiérage.

6. Procédé selon l'une quelconque des revendications précédentes, **caractérisé en ce que** des noyaux contenant au moins un additif actif sont extraits du process, et qu'ensuite, un revêtement en une substance ou un mélange de substances exécutant un changement de phase est formé sur la surface des noyaux.

7. Procédé selon l'une quelconque des revendications précédentes, **caractérisé en ce que** le revêtement est formé dans un procédé à lit fluidisé.

8. Procédé selon l'une quelconque des revendications précédentes, **caractérisé en ce que** sur le revêtement est formée une couche enveloppe avec une substance hydrophobe ou un mélange de substances hydrophobes.

9. Granulé préparé par un procédé selon l'une quelconque des revendications 1 à 8, **caractérisé en ce que** le granulé est formé d'un noyau contenant au moins 25 % en masse d'au moins un additif actif, ce faisant
les noyaux sont revêtus d'une substance ou d'un mélange de substances
la substance ou le mélange de substances formant au moins un revêtement exécute un changement de phase dans l'intervalle de température entre 30 et 120 °C et
présente une chaleur de changement de phase d'au moins 150 J/g ou la structure de la texture ou des cristaux de la substance ou du mélange de substances change lors du changement de phase, et
la substance ou le mélange de substances représente une proportion du granulé d'au moins 25 % en masse.

10. Granulé selon la revendication 9, **caractérisé en ce qu'**au moins 30 % en masse d'au moins un additif actif sont contenus.

11. Granulé selon la revendication 9 ou 10, **caractérisé en ce que** le granulé présente une taille de particule de 100 à 1500 µm.

12. Granulé selon l'une quelconque des revendications 9 à 11, **caractérisé en ce que** le revêtement est produit autour des noyaux sous la forme d'une couche en pleine surface complètement fermée.

13. Granulé selon l'une quelconque des revendications 9 à 12, **caractérisé en ce que** l'épaisseur de couche du revêtement s'écarte d'une épaisseur de couche moyenne de ±20 % au maximum.

14. Granulé selon l'une quelconque des revendications 9 à 13, **caractérisé en ce que** le revêtement est formé d'au moins deux substances et/ou d'au moins deux mélanges de substances qui exécutent un changement de phase à des températures de changement de phase différentes.

15. Granulé selon l'une quelconque des revendications 9 à 14, **caractérisé en ce que** le revêtement est formé de deux ou de plusieurs couches formées les unes au-dessus des autres, et **en ce que** les couches sont formées de différentes substances ou de différents mélanges de substances.

16. Granulé selon l'une quelconque des revendications 9 à 15, **caractérisé en ce qu'**en tant qu'additifs actifs, des vitamines, des antioxydants, des colorants et/ou des enzymes sont contenus dans les noyaux.

17. Granulé selon l'une quelconque des revendications 9 à 16, **caractérisé en ce que** le revêtement est formé d'une substance ou d'un mélange de substances choisis parmi l'hydrate d'un sel, un carbonate incluant une proportion d'eau de cristallisation, un phosphate, un citrate, un acétate, une zéolithe et/ou un oxyde métallique.

18. Granulé selon l'une quelconque des revendications 9 à 17, **caractérisé en ce que** le revêtement est formé avec un acide gras et/ou avec une cire de paraffine.

19. Granulé selon l'une quelconque des revendications 9 à 18, **caractérisé en ce que** sur le revêtement est formée une couche d'enveloppe supplémentaire d'une substance hydrophobe ou d'un mélange de substances hydrophobes.

20. Granulé selon l'une quelconque des revendications 9 à 19, **caractérisé en ce qu'**entre la surface du noyau et le revêtement est formée une couche barrière en une substance hydrophobe ou en un mélange de substances hydrophobes.

21. Granulé selon l'une quelconque des revendications 9 à 20, **caractérisé en ce que** la substance hydrophobe est une cire de paraffine et/ou un acide gras à longue chaîne.

22. Granulé selon l'une quelconque des revendications 9 à 21, **caractérisé en ce que** la proportion d'additif actif se réduit de l'intérieur vers l'extérieur.
